# EUROPÄISCHE PATENTSCHRIFT

(11) **EP 0 946 885 B1**
(45) Veröffentlichungstag und Bekanntmachung des Hinweises auf die Patenterteilung: **03.04.2002**
(21) Anmeldenummer: 97950101.2
(22) Anmeldetag: 05.11.1997
(51) Int. Cl.: G01S 7/481, G01B 3/10, G01D 11/24

(54) **MESSANSCHLAGVORRICHTUNG FÜR EIN ENTFERNUNGSMESSGERÄT**
MEASURING STOP DEVICE FOR A DISTANCE-MEASURING APPARATUS
SYSTEME DE BUTEE DE MESURE POUR TELEMETRE

(30) Priorität: 17.12.1996 DE 19652438
(43) Veröffentlichungstag der Anmeldung: 06.10.1999
(73) Patentinhaber: Leica Geosystems AG, 9435 Heerbrugg (CH)
(72) Erfinder: SPRENGER, Franz, CH-9443 Widnau (CH)
(74) Vertreter: Kaminski, Susanne, Dr.
(86) Internationale Anmeldenummer: EP9706109
(87) Internationale Veröffentlichungsnummer: WO9827439

(56) Entgegenhaltungen:
- EP-A- 0 738 899
- GB-A- 205 401
- GB-A- 499 819
- US-A- 4 566 198

## Beschreibung

Die Erfindung betrifft eine Meßanschlagvorrichtung für ein handhaltbares Entfernungsmeßgerät entsprechend den Merkmalen im Anspruch 1.

Aus der GB-A-499819 ist ein Metermaß mit einem aufrollbaren Stahlband bekannt, dessen flächig ausgebildeter hinterer Meßanschlag durch Drehung um eine Achse parallel zur Meßrichtung nach oben ausklappbar ist. Bei einem nach oben ausgeklappten Meßanschlag und bei auf dem Boden aufgesetzten Metermaß kann an einer Bowlingkugel in Höhe ihres Radius angeschlagen und eine Entfernungsmessung durchgeführt werden.

Aus der GB-A-499819 ist ein Metermaß mit einem aufrollbaren Stahlband bekannt, dessen flächig ausgebildeter hinterer Meßanschlag durch Drehung um eine Achse parallel zur Meßrichtung nach oben ausklappbar ist. Bei einem nach oben ausgeklappten Meßanschlag und bei auf dem Boden aufgesetzten Metermaß kann an einer Bowlingkugel in Höhe ihres Radius angeschlagen und eine Entfernungsmessung durchgeführt werden.

Das aus der WO 94/27164 bekannte oder in der Gebrauchsanleitung "Disto" der Firma Leica AG, 9435 Heerbrugg, Schweiz, 1994 beschriebene optoelektronische Entfernungsmeßgerät ist ein Handmeßgerät, mit dem Entfernungen zu einem Objektpunkt optisch gemessen werden können. Dabei wird die Entfernung zu dem Objektpunkt entweder von einem vorderen oder von einem hinteren Meßanschlag des Entfernungsmeßgerätes aus gemessen. Als Meßanschläge dienen im allgemeinen die vorderen und hinteren Gehäuseflächen des Entfernungsmeßgerätes, die einen rechten Winkel zur Meßrichtung bilden. Den beiden Meßanschlägen ist jeweils eine separate Meßtaste auf dem Tastenfeld des Meßgerätes zugeordnet, bei deren Betätigung eine dementsprechende Entfernungsmessung ausgelöst und der Entfernungsmeßwert auf einem Display angezeigt wird.

Solche optoelektronischen Entfernungsmeßgeräte werden überwiegend in der Bauvermessung eingesetzt. Eine im sichtbaren roten Wellenlängenbereich emittierende Halbleiterlaserdiode erzeugt auf dem Objekt einen Lichtpunkt, so daß exakt diejenige Stelle des Objekts angezielt werden kann, zu der die Entfernung bestimmt werden soll.

Zusätzlich können bei rechtwinkligen Räumen durch Messung der Länge, Breite und Höhe auch einzelne Flächen oder auch das Volumen des Raumes automatisch vom Entfernungsmeßgerät ermittelt und auf dem Display angezeigt werden. Oftmals sollen dabei aus Kontrollgründen auch die Flächendiagonalen vermessen werden. Da aber der flächige hintere

Meßanschlag des Entfernungsmeßgerätes nicht in die Eckenlinie zweier aneinandergrenzender Wandflächen angelegt werden kann, besitzt das Entfernungsmeßgerät zusätzlich einen ausklappbaren Eckenmeßbügel. Der Eckenmeßbügel dient somit im ausgeklappten Zustand als Meßanschlag für die Eckenlinie. Mit Hilfe des sichtbaren Laserlichtpunktes kann die diagonal gegenüberliegende Eckenlinie anvisiert und die Entfernung dorthin, also die Länge der Diagonale der zugehörigen Fläche, bestimmt werden.

Dabei erfolgt aber die eigentliche Entfernungsmessung weiterhin nur vom hinteren, regulären Meßanschlag aus. Deshalb muß der Benutzer zu dem angezeigten Meßergebnis die Tiefe des Eckenmeßbügels selbst noch hinzuaddieren. Die Tiefe des aufgeklappten Eckenmeßbügels, also der Abstand zwischen dem hinteren Meßanschlag des Entfernungsmeßgeräts und der Eckenlinie, ist bekannt. Bei einer derartigen Entfernungsbestimmung besteht die Gefahr, daß ein unkonzentrierter Benutzer durch eine falsch ausgeführte Addition oder durch Vergessen der Addition ein fehlerhaftes Meßergebnis erzielt. Außerdem besteht die Gefahr, daß sich der Eckenmeßbügel aus seiner senkrechten Raststellung zum Meßanschlag löst, so daß die vorgegebene Additionskonstante nicht den aktuellen Verhältnissen entspricht.

Es ist Aufgabe der Erfindung, eine einfache, zuverlässige und kostengünstige mechanische Vorrichtung anzugeben, mit der eine Entfernungsmessung mit einem Entfernungsmeßgerät sowohl von einer Eckenlinie aus als auch von einer ebenen Fläche aus mit jeweils demselben Meßanschlag, demselben Meßvorgang und der sofortigen korrekten Entfernungsanzeige auf dem Display ermöglicht wird.

Diese Aufgabe wird erfindungsgemäß durch die im Kennzeichen des Anspruchs 1 angegebenen Merkmale gelöst. Vorteilhafte Ausgestaltungen und Weiterbildungen der Erfindung ergeben sich aus den Unteransprüchen.

Der hintere Meßanschlag des Entfernungsmeßgeräts ist erfindungsgemäß einerseits linienförmig ausgebildet. Dabei soll vorzugsweise der linienförmige Meßanschlag parallel zur Breite des Gerätes verlaufen. Die Linienform des Meßanschlags kann beispielsweise dadurch erreicht werden, daß sich das Gehäuse des Gerätes nach hinten verjüngt. Dabei können zwei ebene Oberflächen in spitzem Winkel aufeinander zulaufen und als Berührungslinie eine scharfe Kante bilden. Senkrecht von dieser Kante aus wird die Entfernung zu einem Objektpunkt gemessen.

Eine solche scharfe Kante ist ideal für eine Eckenmessung. Die Kante liegt direkt an der Eckenlinie, die von zwei aneinander grenzenden Wandflächen gebildet wird, an. Der Kontakt mit der Eckenlinie bleibt auch dann erhalten, wenn das Meßgerät verschwenkt wird. Beispielsweise beträgt speziell bei der Messung der Diagonalen einer quadratischen Grundfläche in einem Raum der Winkel zwischen dem Meßgerät und den die Eckenlinie bildenden Seitenwänden 45°. Im allgemeinen Fall einer rechteckigen Grundfläche weicht dieser Winkel von 45° ab, und zwar um so stärker, je schmaler die Form des Rechtecks ist. Dabei kann eine scharfe Kante als Meßanschlag immer in direkte Berührung mit der Eckenlinie gebracht werden.

Alternativ zu einer Kante kann der hintere Meßanschlag auch formschöner gestaltet werden. Er kann beispielsweise zylinderförmig abgerundet sein. Auch mit einem zylinderförmigen Meßanschlag ist eine einzige Berührungslinie mit der Eckenlinie zweier Wände möglich, sofern sein Krümmungsradius kleiner ist als der der Eckenlinie. Deswegen wird ein angemessener Krümmungsradius gewählt, denn die Entfernung wird ja von der hintersten Linie des Meßanschlags aus gemessen. Sollte der Meßanschlag aufgrund eines größeren Krümmungsradius an beiden Wandseiten anliegen und deswegen zwei Berührungslinien bilden, so führt dies aber nur zu unerheblichen Meßabweichungen, die weit innerhalb der in der Praxis üblichen Meßtoleranzen liegen. Dasselbe gilt auch bei der diagonalen Messung in sehr schmalen Rechteckräumen, bei denen der Meßanschlag ebenfalls zwei Berührungslinien mit den Wänden bilden kann.

Mit einem solchen linienförmigen Meßanschlag wird also als reguläre Messung zunächst eine Entfernungsmessung senkrecht zu einer Eckenlinie ermöglicht. Soll damit andererseits auch von einer ebenen Fläche aus gemessen werden, so ergibt die Linienform des Meßanschlags zwar in Linienrichtung einen stabilen rechten Winkel zur Fläche, nicht jedoch quer dazu. Das Meßgerät würde auf der zylindrischen Oberfläche abrollen. Um die Instabilität dieser Querrichtung zu vermeiden, ist erfindungsgemäß der linienförmige Meßanschlag in wenigstens zwei Anschlagbereiche aufgeteilt, wobei ein Meßanschlagbereich drehbar um eine parallel zur Meßrichtung verlaufende Achse ist. Dadurch bewegt sich der drehbare Meßanschlagbereich bei Drehung in einer Ebene senkrecht zur Meßrichtung. Aufgrund der Drehung verlaufen die linienförmigen Meßanschlagbereiche in unterschiedlichen Richtungen und spannen somit eine Ebene auf. Deshalb geben sie dem Entfernungsmeßgerät auf einer ebenen Standfläche einen stabilen Halt und bewirken eine senkrechte Ausrichtung der Meßrichtung zur Standfläche.

Es wird also mit einem kleinen Handgriff, nämlich der Drehung eines Teils des Meßanschlags, erreicht, daß eine Messung entweder senkrecht von einer ebenen Fläche wie beispielsweise von einer Wand- oder Bodenfläche aus die Entfernung zu einer gegenüberliegenden Fläche oder zu einem bestimmten Punkt erfolgen kann. Oder es kann senkrecht von einer Eckenlinie aus gemessen werden. In beiden Meßarten dient der linienförmige hintere Meßanschlag als Basislinie für die Entfernungsmessung. Demnach kann auch in beiden Meßarten der Benutzer direkt den Entfernungsmeßwert vom Display des Gerätes ablesen. Wegen der instabilen Lage der hinteren Anschlaglinie auf einer Fläche wird der Benutzer zwangsläufig daran erinnert, den drehbaren Teil zu betätigen, um eine stabile An- oder Auflage zu erreichen.

Im folgenden werden Ausführungsbeispiele der Erfindung anhand der Zeichnung näher erläutert. Es zeigt:
- Figur 1a: schematisch ein handhaltbares Entfernungsmeßgerät mit einer erfindungsgemäßen Meßanschlagvorrichtung,
- Figur 1b: eine Seitenansicht der in Figur 1a dargestellten Meßanschlagvorrichtung,
- Figur 1c: eine Meßanschlagvorrichtung, bei der der drehbare Meßanschlagbereich gegenüber der Figur 1a um 90° gedreht ist,
- Figur 1d: eine Seitenansicht der in Figur 1c dargestellten Meßanschlagvorrichtung,
- Figur 2: einen zum Entfernungsmeßgerät asymmetrisch angeordneten drehbaren Meßanschlagbereich und
- Figur 3: eine Meßanschlagvorrichtung mit zwei drehbaren Meßanschlagbereichen.

In Figur 1a ist schematisch ein handhaltbares Entfernungsmeßgerät 4 mit einem erfindungsgemäßen linienförmigen hinteren Meßanschlag 1 dargestellt. Dieser ist in zwei Meßanschlagbereiche 1a, 1b aufgeteilt. Der links- und rechtsseitige Meßanschlagbereich 1a ist mit dem Entfernungsmeßgerät 4 starr verbunden, während der dazwischen liegende Meßanschlagbereich 1b um eine Achse 3 drehbar ist. In diesem Ausführungsbeispiel stimmen die Achse 3 und die Gerätelängsachse 5 miteinander überein. Zudem ist die Richtung der Gerätelängsachse 5 mit der Meßrichtung 6 des Entfernungsmeßgerätes 4 identisch. Die Meßrichtung 6 ist die Richtung zu einem Objekt oder Objektpunkt, zu dem die Entfernung gemessen werden soll, und sie steht senkrecht zum hinteren Meßanschlag 1.

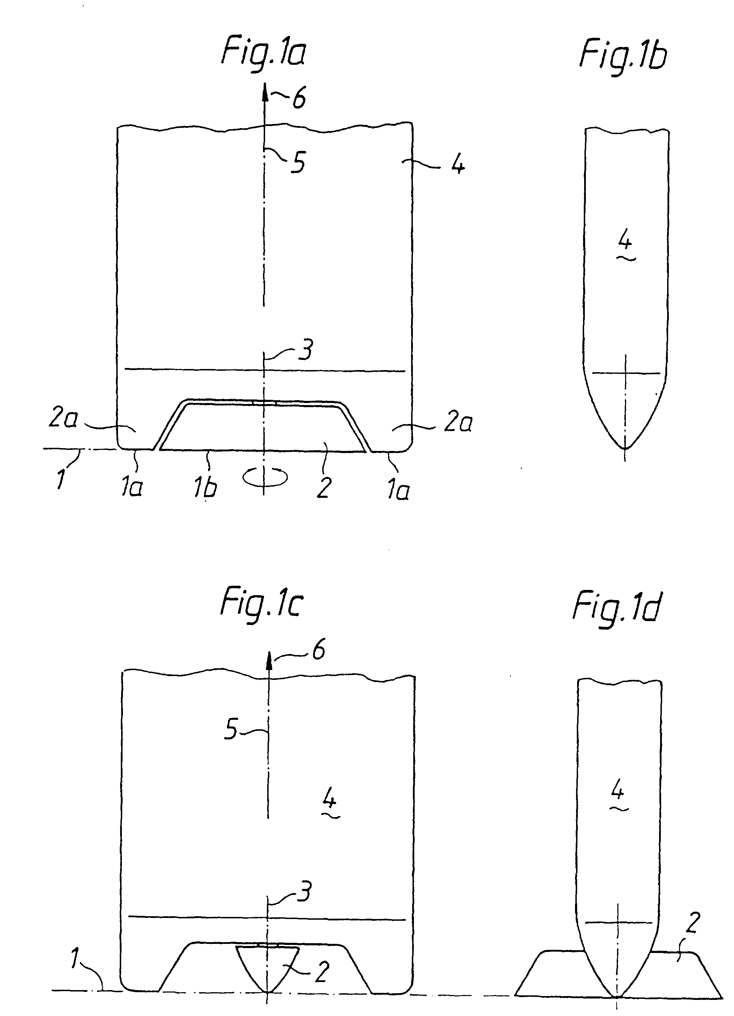

Da einerseits der Meßanschlag 1 linienförmig ausgebildet ist und andererseits das Entfernungsmeßgerät 4 eine gewisse Dicke besitzt, gibt es dazwischen eine Übergangszone 2, 2a, die unterschiedliche Formen aufweisen kann. Die Formen können beispielsweise ebene Flächen sein, die in einer scharfen Kante auslaufen, wobei die scharfe Kante die Meßanschlagbereiche 1a, 1b darstellt. Die Übergangszonen 2, 2a können aber auch eine gekrümmte Oberfläche aufweisen, wie sie in Figur 1a bzw. in der dazugehörigen Seitenansicht in Figur 1b gezeigt ist. Die Meßanschlagbereiche 1a, 1b sind zylinderförmig abgerundet. Sind der starr angeordnete Meßanschlagbereich 1a und der drehbare Meßanschlagbereich 1b in einer Linie ausgerichtet (Figur 1a, 1b), so kann damit das Entfernungsmeßgerät 4 leicht mit einer von zwei Wänden gebildeten Eckenlinie in Anschlag gebracht werden. Dadurch ist eine Entfernungsmessung von einer Eckenlinie aus problemlos möglich. Der im Display des Entfernungsmeßgerätes 4 angezeigte Entfernungsmeßwert entspricht bereits der Entfernung von der Eckenlinie zum angezielten Objekt. Eine vom Benutzer auszuführende Addition wie beim Stand der Technik ist damit nicht mehr notwendig.

Soll andererseits das Entfernungsmeßgerät 4 mit einer ebenen Fläche senkrecht in Anschlag gebracht werden, so kann erfindungsgemäß der drehbare Meßanschlagbereich 1b um die Achse 3 gedreht werden. Dabei kann ein beliebiger Winkel gegenüber der Ausrichtung des starr angeordneten Meßanschlagbereichs 1a eingestellt werden. Da die Achse 3 parallel zur Meßrichtung 6 des Entfernungsmeßgerätes 4 verläuft, befinden sich die Meßanschlagbereiche 1a, 1b stets in einer senkrechten Ebene dazu. In Figur 1c ist eine 90°-Drehstellung des Meßanschlagbereichs 1b gegenüber dem Meßanschlagbereich 1a dargestellt. Figur 1d zeigt die dazugehörige Seitenansicht. Somit ist die Meßrichtung 6 stabil im rechten Winkel zur Standfläche des Entfernungsmeßgerätes 4 ausgerichtet und es wird von demselben Meßanschlag 1 aus gemessen wie es bei der Eckenlinienmessung der Fall ist.

Insgesamt kann also mit Hilfe des drehbaren Meßanschlagbereichs 1b und der linienförmigen Gestaltung der Meßanschlagbereiche 1a, 1b eine Entfernungsmessung sowohl von einer Eckenlinie als auch von einer ebenen Fläche aus mit einem stabilen Meßanschlag 1 durchgeführt werden. Da stets von demselben Meßanschlag 1 gemessen wird, braucht der angezeigte Entfernungsmeßwert nicht mehr korrigiert werden.

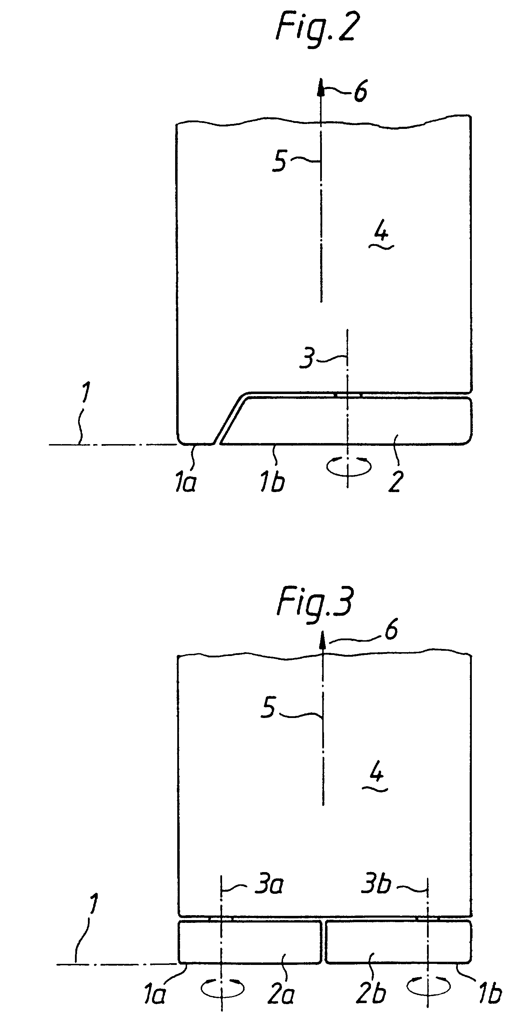

Fig. 2 zeigt eine Ausgestaltungsvariante der Erfindung mit einem asymmetrisch angeordneten drehbaren Meßanschlagbereich 1b, dessen Achse 3 gegenüber der Gerätelängsachse 5 parallel versetzt ist. Zudem ist nur auf einer Seite des Entfernungsmeßgerätes 4 ein starr mit ihm verbundener Meßanschlagbereich 1a vorgesehen. Dadurch wird die Länge des drehbaren Meßanschlagbereichs 1b vergrößert, der bei Querstellung zum starren Meßanschlagbereich 1a mit diesem eine große dreieckförmige Standfläche bildet. Dies gibt dem Entfernungsmeßgerät 4 einen noch stabileren Stand.

In Fig. 3 ist ein weiteres Ausführungsbeispiel mit zwei jeweils um eine Achse 3a, 3b drehbaren Meßanschlagbereichen 1a, 1b dargestellt. Stehen die Meßanschlagbereiche 1a, 1b in einer Linie zueinander, so wird eine Entfernungsmessung von einer Eckenlinie aus ermöglicht, wie unter Fig.1a und Fig.1b bereits gezeigt und beschrieben. Zur Entfernungsmessung von einer ebenen Fläche aus können die beiden Meßanschlagbereiche 1a, 1b bzw. die mit ihnen verbundenen Übergangszonen 2a,2b um ihre jeweiligen Achsen 3a, 3b gedreht werden. Beispielsweise können sie gegenläufig und so lange gedreht werden, bis sie etwa senkrecht zu ihrer vorherigen Stellung ausgerichtet sind. Dadurch ergibt sich ebenfalls ein sehr stabiler Stand des Entfernungsmeßgerätes 4. Dafür muß ein etwas höherer Fertigungsaufwand in Kauf genommen werden. Sofern keine Zahnradverbindung oder kein Antriebsriemen zwischen den beiden Achsen 3a, 3b besteht, sind für entsprechende Einstellungen zwei Handgriffe notwendig, gegenüber nur einem Handgriff bei den Ausführungen gemäß Fig. 1 und Fig. 2.

## Patentansprüche

1. Meßanschlagvorrichtung für ein handhaltbares Entfernungsmeßgerät (4) mit einem senkrecht zur Meßrichtung (6) verlaufenden drehbaren hinteren Meßanschlag (1), **dadurch gekennzeichnet, daß** der hintere Meßanschlag (1) linienförmig ausgebildet ist und daß er in mindestens zwei Meßanschlagbereiche (1a, 1b) aufgeteilt ist, wobei wenigstens ein Meßanschlagbereich (1b) drehbar um eine parallel zur Meßrichtung (6) verlaufende Achse (3) ist.

2. Meßanschlagvorrichtung nach Anspruch 1, **dadurch gekennzeichnet, daß** der drehbare Meßanschlagbereich (1b) seitensymmetrisch zur Achse (3) ausgebildet ist.

3. Meßanschlagvorrichtung nach Anspruch 1 oder 2, **dadurch gekennzeichnet, daß** die Achse (3) mit der Längsachse (5) des Entfernungsmeßgerätes (4) übereinstimmt.

4. Meßanschlagvorrichtung nach Anspruch 1 oder 2, **dadurch gekennzeichnet, daß** der drehbare Meßanschlagbereich (1b) asymmetrisch zur Längsachse (5) des Entfernungsmeßgerätes (4) angeordnet ist.

5. Meßanschlagvorrichtung nach Anspruch 1 oder 2, **dadurch gekennzeichnet, daß** zwei jeweils um eine Achse (3a,3b) drehbare Meßanschlagbereiche (1a,1b) vorgesehen sind.

## Claims

1. Measuring stop device for a hand-held distance-measuring apparatus (4) comprising a rotatable rear measuring stop (1) perpendicular to the measuring direction (6), **characterized in that** the rear measuring stop (1) is linear and that it is divided into at least two measuring stop regions (1a, 1b), at least one measuring stop region (1b) being rotatable about an axis (3) parallel to the measuring direction (6).

2. Measuring stop device according to Claim 1, **characterized in that** the rotatable measuring stop region (1b) is laterally symmetrical with respect to the axis (3).

3. Measuring stop device according to Claim 1 or 2, **characterized in that** the axis (3) coincides with the longitudinal axis (5) of the distance-measuring apparatus (4).

4. Measuring stop device according to Claim 1 or 2, **characterized in that** the rotatable measuring stop region (1b) is arranged asymmetrically with respect to the longitudinal axis (5) of the distance-measuring apparatus (4).

5. Measuring stop device according to Claim 1 or 2, **characterized in that** two measuring stop regions (1a, 1b) each rotatable about an axis (3a, 3b) are provided.

## Revendications

1. Dispositif de butée de mesure pour un télémètre (4) portatif muni d'une butée de mesure arrière (1) susceptible de tourner, s'étendant perpendiculairement à la direction de mesure (6), **caractérisé en ce que** la butée de mesure arrière (1) est de configuration linéaire, et **en ce qu'**elle est subdivisée en au moins deux zones de butée de mesure (1a, 1b), au moins une zone de butée de mesure (1b) étant susceptible de tourner autour d'un axe (3) s'étendant parallèlement à la direction de mesure (6).

2. Dispositif de butée de mesure selon la revendication 1, **caractérisé en ce que** la zone de butée de mesure (1b) susceptible de tourner est de configuration symétrique latérale par rapport à l'axe (3).

3. Dispositif de butée de mesure selon la revendication 1 ou 2, **caractérisé en ce que** l'axe (3) coïncide avec l'axe longitudinal (5) de l'appareil de mesure de distance (4).

4. Dispositif de butée de mesure selon la revendication 1 ou 2, **caractérisé en ce que** la zone de butée de mesure (1b) susceptible de tourner est disposée asymétriquement par rapport à l'axe longitudinal (5) du télémètre (4).

5. Dispositif de butée de mesure selon la revendications 1 ou 2, **caractérisé en ce que** deux zones de butée de mesure (1a, 1b) susceptibles de tourner autour d'un axe (3a, 3b) sont prévues.
